# EUROPEAN PATENT SPECIFICATION

(11) **EP 4 422 898 B1**
(45) Date of publication and mention of the grant of the patent: **06.08.2025**
(21) Application number: 22809195.5
(22) Date of filing: 28.10.2022
(51) Int. Cl.: B60K 1/02

(54) **TRACTION ASSEMBLY FOR A VEHICLE**
ANTRIEBSANORDNUNG FÜR EIN FAHRZEUG
ENSEMBLE DE TRACTION POUR VÉHICULE

(30) Priority: 29.10.2021 IT 202100027773
(43) Date of publication of application: 04.09.2024
(73) Proprietor: IVECO S.P.A., 10156 Torino (IT)
(72) Inventor: DE SOMMA, Michele, 10156 TORINO (IT); PEREIRA DE LEMOS, José Francivaldo, 10156 TORINO (IT)
(74) Representative: Studio Torta S.p.A.
(86) International application number: PCT/IB2022/060383
(87) International publication number: WO 2023/073632

(56) References cited:
- WO-A1-2020/194950
- US-A1- 2014 371 016
- US-A1- 2021 291 643

## Description

### Technical Field

The present invention relates to a vehicle traction assembly, more specifically to an electric traction assembly for a commercial vehicle.

### State of the Prior Art

The ecological transition increasingly requires the use of electric motors to aid or replace internal combustion engines for vehicle transport.

To this end, it is known to provide traction assemblies configured to provide torque to the wheels of a vehicle, while comprising a power take-off configured to connect to an output shaft of an internal combustion engine and one or more electric motors configured to cooperate or replace said internal combustion engine.

These traction assemblies are required to be compact and versatile, in other words, not to increase the vehicle's overall dimensions and weight excessively, but to provide various functional configurations. This requirement is all the more so in commercial vehicles where it is necessary to be able to supply torque to the wheels according to the different operational requirements of the vehicle.

Examples of known systems are known in publications US2014/371016 A1, US2021/291643 A1 or WO2020/194950 A1.

There is therefore a need to provide traction assemblies that can be versatile and compact.

The object of the present invention is to meet the above requirements in a cost-effective and optimized manner.

### Summary of the Invention

Said object is achieved by means of a traction assembly and a vehicle as claimed in the appended claims.

### Brief Description of the Drawings

For a better understanding of the present invention, a preferred embodiment is described below by way of non-limiting example and with reference to the accompanying drawings, wherein:
- Figure 1 shows a schematic side view of a traction assembly according to a first embodiment of the invention;
- Figures 2 and 3 show two different operating conditions of the traction system in Figure 1;
- Figure 4 shows a schematic side view of a traction assembly according to a second embodiment of the invention; and
- Figures 5 and 6 show two different operating conditions of the traction system in Figure 4.

### Detailed Description of the Invention

The reference number 1 in the attached figures indicates a traction assembly according to the invention, configured to transmit torque to respective axle shafts 2, 3, a left and a right axle shaft, respectively.

Each axle shaft 2, 3 is configured to drive a wheel hub 2a, 3a, attached to an outer end 2', 3' of the respective axle shaft 2, 3, which is configured to be integral with a wheel assembly 4, e.g., in the case shown, a twin wheel assembly.

In particular, the traction assembly 1 is configured to supply torque to the axle shafts 2, 3 via at least one electric machine 5a, 5b, optionally even only configured as an electric motor, configured to supply torque using electrical energy, for example provided by a vehicle battery assembly (not shown), or to absorb torque to generate electrical energy to be supplied to said battery assembly.

In the example shown, the traction assembly 1 comprises a pair of electric machines 5a, 5b whose respective operating shaft 5a', 5b' is parallel to a longitudinal axis A of the axle shafts 2, 3 which are coaxial with each other.

The traction assembly 1 comprises a transmission 6 operatively interposed between the left and right axle shafts 2, 3 and the pair of electric machines 5a, 5b and configured to allow torque transmission in a first configuration, in which a single electric machine 5b supplies torque to both axle shafts, and in a second configuration, in which each electric machine 5a, 5b supplies torque to the axle shafts independently of each other.

Advantageously, the traction assembly 1 comprises a casing 7 configured to delimit a space 8 isolated from the outside; the space 8 is configured to house the transmission 6 as described below. Preferably, the casing 7 comprises a central portion 7a and a pair of lateral portions 7b located at the axle shafts 2, 3.

As shown, the transmission 6 comprises, between each electric machine 5a, 5b and the respective axle shaft 2, 3, a reduction stage 9a, 9b configured to vary the speed/torque transmitted between the operating shaft 5a', 5b' and the respective axle shaft 2, 3.

It is noted that, advantageously, the electric machines 5a, 5b are located opposite the longitudinal axis A and that the reduction stages 9a, 9b are arranged symmetrically in relation to a transverse centreline axis (not shown) perpendicular to the axis A.

In particular, each reduction stage 9a, 9b comprises a first toothed wheel 11a, 11b driven by the operating shaft 5a', 5b' and configured to mesh with a second toothed wheel 12a, 12b carried integrally by a support shaft 13a, 13b carried in a rotationally free way by the casing 7 parallel to the axis A. The support shaft 13a, 13b rigidly carries a third toothed wheel 14a, 14b configured to mesh with a toothing 15a, 15b described in greater detail below.

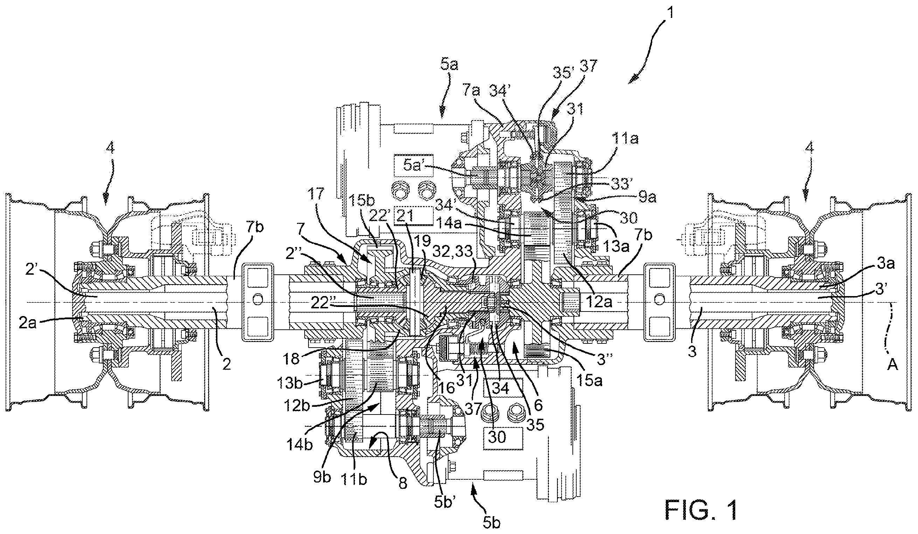

One of the toothings 15a, 15b is advantageously made on a carrier 18 of a differential 17. In particular, the differential 17 is operatively connected between one of the axle shafts 2, 3 and a support hub 16. In the case described in Figures 1 to 3, the differential 17 connects an inner end 2" of the left axle shaft 2 to the support hub 16, which is interposed, on the opposite side along the longitudinal axis A, with an inner end 3'' of the right axle shaft 3.

As shown, the differential 17 may be of a known type, i.e., comprising the carrier 18 which carries a plurality of planet wheels 19, e.g., four planet wheels angularly equally spaced at 90° from each other and supported by a cross-shaped support 21 rigidly carried by the carrier 18 and around whose arms the planet wheels 19 can rotate. In particular, the planet wheels rotate on the support 21 around axes contained in a plane perpendicular to the axis A.

The planet wheels 19 cooperate with a respective sun gear respectively comprising a left bevel toothed wheel 22" and a right toothed wheel 22" rigidly carried by the left axle shaft 2 and the support hub 16, respectively.

The other one of the toothings 15a, 15b is integral with the right axle shaft 3, in particular with a portion rigidly connected thereto and defining the inner end 3".

According to the embodiment in Figures 1 to 3, the transmission 6 comprises first selector means 30 configured to selectively make the support hub 16 integral with the inner end 3' of the right axle shaft 3, and second selector means 30 configured to selectively make two portions of the operating shaft 5a' of the first electric machine 5a integral with each other.

Both the first and second selector means 30 comprise a sleeve 31 which is integral with the rotation but free to translate on the axis A on the respective support.

In particular, the sleeve 31 of the first selector means defines a first and a second toothing 33, 34, which are configured to cooperate with respective toothings 35, 36 integral with the support hub 16 and the end 3" of the right axle shaft, respectively. Advantageously, these toothings 33, 34, 35 and 36 are toothings axial in relation to the axis A.

On the other hand, the sleeve 31 of the second selector means 30 defines an inner radial toothing 33' configured to selectively cooperate with a pair of outer radial toothings 35', 36' formed on the two portions of the operating shaft 5a' or only on one of them.

In particular, the selector means 30 comprise actuator means 37 configured to move the sleeve 31 along the longitudinal axis A on the support hub 16. Advantageously, said actuator means 37 are pneumatic actuator means.

Preferably, according to the described embodiment, said actuator means 37 comprise a rod 38 configured to carry a piston 41 which is free to move in a chamber 42 designed to selectively house a pressurized fluid, e.g., compressed air.

The actuator means 37 may also include elastic means 43, such as a helical spring 44, operatively interposed between the rod 38 and the casing 7 in order to keep the sleeve 31 in a predefined position.

In particular, in the embodiment shown, the elastic means 43 are configured to keep the sleeve 31 of the first selector means 30 so that the toothing 33 does not cooperate with the toothing 35 and to keep the sleeve 31 of the second selector means 30 so that the toothing 33' meshes with both the toothings 34', 35'.

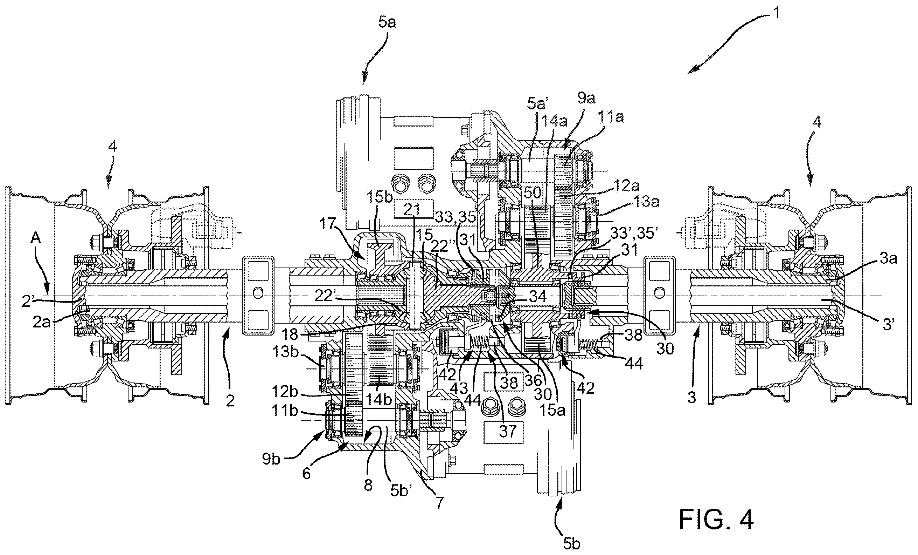

The embodiment in Figures 4 to 6 differs from the embodiment in Figures 1 to 3 in that the operating shaft 5a' of the first electric machine 5a is directly connected to the toothed wheel 11a and the toothed wheel 15a is integral with a hub 50 rotatably carried by the casing 7.

In particular, the hub 50 is also housed in a rotationally free way on the inner end 3" of the right axle shaft 3.

The first selector means 30 of the embodiment in Figures 4 to 6 are operatively interposed between the inner end 3'' of the right axle shaft 3 and the support hub 16, similar to the embodiment in Figures 1 to 3, whereas the second selector means 30 are operatively interposed between the hub 50 and the right axle shaft 3 and are configured to selectively connect the latter.

In particular, therefore, in this embodiment, the selector means 30 comprise an inner radial toothing 33" configured to cooperate with a corresponding outer radial toothing 34" made on the right axle shaft and a toothing 35" configured to cooperate with a toothing 36'' made on the hub 50. In particular, the toothings 35" and 36" are axial toothings.

The toothed wheels shown herein all have straight teeth, although it is clear that they can be made using different toothing types.

Clearly, additional mechanical elements such as rolling and sliding supports, gaskets, and fasteners, although illustrated, have not been described for the sake of brevity and because they are related to construction details that may vary according to different assembly and manufacturing settings.

The operation of the traction assembly 1 according to the first embodiment described above (Figures 1-3) is as follows.

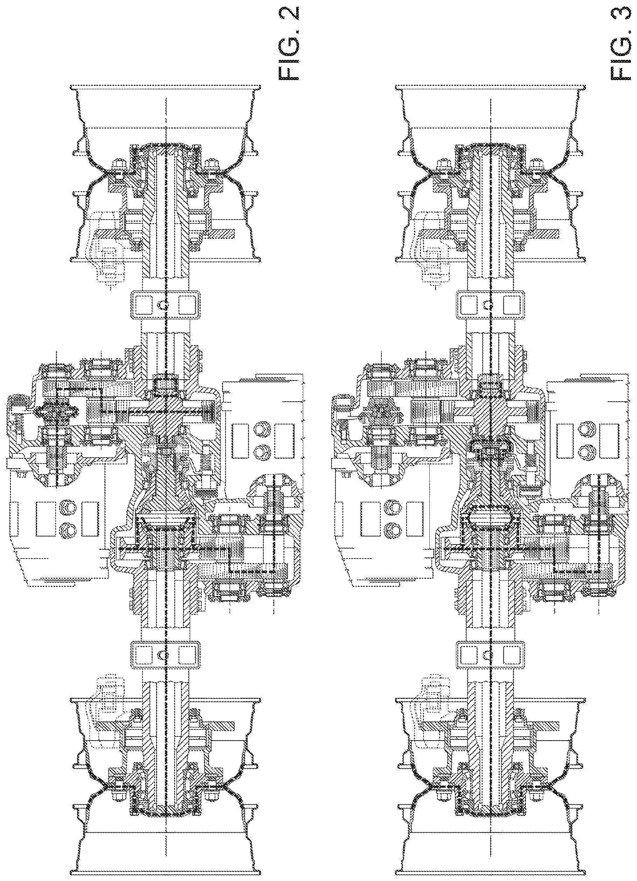

In a first operating condition, shown in Figure 2, where the broken lines indicate the torque path, both the electric machines 5a, 5b supply torque to the respective wheel hubs 3a, 3b. In this configuration, the first selector means 30 are controlled by the actuator means 37 so that only the toothing 34 cooperates with the toothing 32, and the second selector means 30 are controlled by the actuator means 37 so that the toothing 33' meshes with both the toothings 34', 35', thus making the toothed wheel 11a integral with the operating shaft 5a. In this operating condition, the differential 17 allows the entire torque to be passed to the left axle shaft 2, whereas the torque supplied by the first electric machine 5a flows to the right axle shaft alone, which is disconnected from the support hub 16 and thus independent of the differential 17. The control of the torque/speed compensation at the two axle shafts can therefore be adjusted electronically via an electronic unit (not shown) connected to the two electric motors 5a, 5b.

In a second operating condition, shown in Figure 3, where the broken lines indicate the torque path, the second electric machine 5b alone supplies torque to both the wheel hubs 3a, 3b. In this configuration, the first selector means 30 are controlled by the actuator means 37 so that only the toothing 34 cooperates with the toothing 32 and so that the toothing 35 cooperates with the toothing 33, whereas the second selector means 30 are controlled by the actuator means 37 so that the toothing 33' meshes with the toothing 34' alone, thus making the toothed wheel 11a idle with respect to the first portion of the operating shaft 5a, i.e., not drivable or driving the electric machine. In this operating condition, the differential 17, as is known, splits the torque from the second electric machine 5b to both the axle shafts 2, 3.

A further operating configuration, not shown, is possible, where the selector means connect the first electric machine 5a to the toothed wheel 11a in the second operating configuration. This alternative configuration can be useful in some system mode conditions in which the electric machines 5a, 5b operate as a generator and are driven by the axle shafts 2, 3, for example in neutral mode of the vehicle or downhill/in motion without positive acceleration by the driver.

The operation of the traction assembly 1 according to the second embodiment described above (Figures 4-6) is as follows.

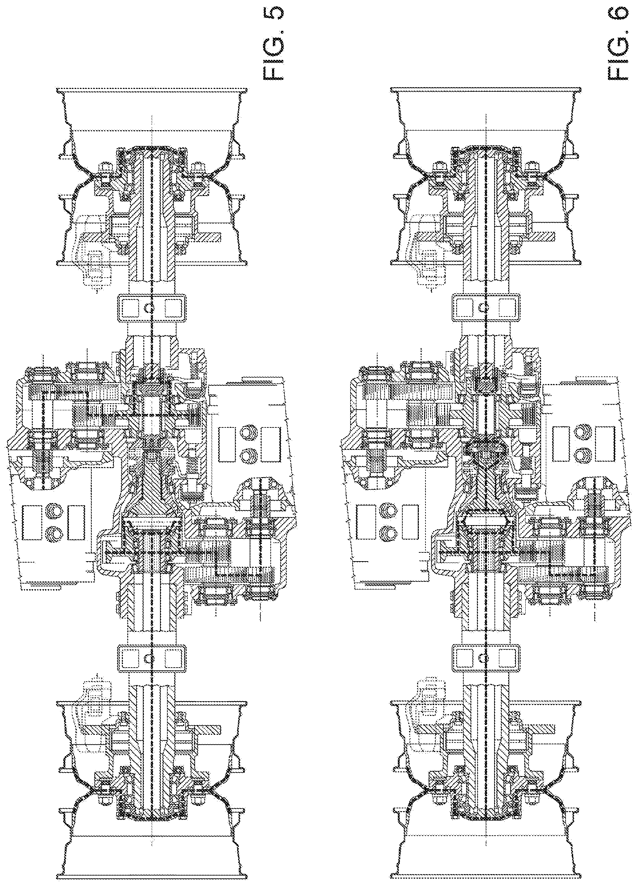

In a first operating condition, shown in Figure 5, where the broken lines indicate the torque path, both the electric machines 5a, 5b supply torque to the respective wheel hubs 3a, 3b. In this configuration, the first selector means 30 are controlled by the actuator means 37 so that only the toothing 34 cooperates with the toothing 32, and the second selector means 30 are controlled by the actuator means 37 so that the toothing 34'' meshes with the toothing 35", thus making the hub 50 integral with the right axle shaft 3. In this operating condition, the differential 17 allows the entire torque to be passed to the left axle shaft 2, whereas the torque supplied by the first electric machine 5a flows to the right axle shaft 3 alone, which is disconnected from the support hub 16 and thus independent of the differential 17. The control of the torque/speed compensation at the two axle shafts can therefore be adjusted electronically via an electronic unit (not shown) connected to the two electric motors 5a, 5b.

In a second operating condition, shown in Figure 6, where the broken lines indicate the torque path, the second electric machine 5b alone supplies torque to both the wheel hubs 3a, 3b. In this configuration, the first selector means 30 are controlled by the actuator means 37 so that only the toothing 34 cooperates with the toothing 32 and so that the toothing 35 cooperates with the toothing 33, whereas the second selector means 30 are controlled by the actuator means 37 so that the toothings 34" and 35'' do not mesh with each other, thus making the hub 50 idle with respect to the right axle shaft 3. In this operating condition, the differential 17, as is known, splits the torque from the second electric machine 5b to both the axle shafts 2, 3.

Similar to the first embodiment, a further operating configuration, not shown, is possible, where the selector means connect the hub 50 to the right axle shaft 3 in the second operating configuration. This alternative configuration can be useful in some system mode conditions in which the electric machines 5a, 5b operate as a generator and are driven by the axle shafts 2, 3, for example in neutral mode of the vehicle or downhill/in motion without positive acceleration by the driver.

The advantages of a traction assembly and a vehicle according to the invention are clear from the foregoing.

The traction system allows purely electric traction to be provided up to a tonnage of 7 tons, in particular even just using one of the electric machines.

In detail, both electric machines can be used at start or in some overload conditions, unclogging the differential and controlling the torque split electronically.
Thus, when not needed, it is possible to consume less electrical energy since only one of the electric motors is activated.

The traction system is also particularly compact and uses very few mechanical elements, therefore the manufacturing costs are reduced. Moreover, the layout of the electric machines and reduction stages is optimized to reduce the tilting stress.

Furthermore, since all the rotating mechanical elements are inside the transmission housing casing, which is lubricated, the service life of the traction system is increased, and maintenance costs are reduced.

Lastly, it is clear that modifications and variations may be made to the traction assembly and the vehicle according to the present invention, without however departing from the scope of protection defined by the claims.

For example, it is clear that the described toothed wheels, the differential, and other types of mechanical connections can be replaced by equivalent devices.

Similarly, the number of electric motors or the shape of the casing may vary, or still, the reduction stage may have more speed jumps.

## Claims

1. A traction assembly (1) for a vehicle, said traction assembly (1) comprising a left and a right axle shaft (2, 3) extending along a longitudinal axis (A) and defining an outer end configured to be connected to a wheel hub (2a, 3a) of said vehicle,
said traction assembly (1) comprising at least a first and a second electric machine (5a, 5b),
said traction assembly (1) comprising a casing (7) defining a housing (8) and a transmission (6) housed in said housing (8) and comprising a differential (13) and selector means (30),
wherein the second electric machine (5b) is operatively connected to one of said axle shafts (2, 3) and the first electric machine (5a) is operatively connectable to one of said axle shafts (2, 3) by means of first selector means of said selector means (30),
**characterized in that** said differential (17) is operatively connectable between said axle shafts (2, 3) by means of second selector means of said selector means (30),
said selector means (30) being controlled so that said transmission (6) allows at least two operating conditions:
- in one of said operating conditions only the second electric machine (5b) provides torque to said axle shafts (2, 3), said differential (17) being operatively connected to said axle shafts (2, 3);
- in another of said operating conditions, the first and second electric machines (5a, 5b) provide torque to a respective axle shaft (2, 3), said differential (17) being operatively disconnected between said axle shafts (2, 3).

2. The assembly according to Claim 1, wherein each of the first and second electric machines (5a, 5b) is operatively connectable to a respective axle shaft (3, 2) by means of a reduction stage (9a, 9b) comprising at least one torque/speed change via a gear between toothed wheels.

3. The assembly according to Claim 2, wherein a reduction stage (9b) between said second electric machine (5b) and said axle shaft (2) weighs on a toothed wheel (15b) rigidly carried by a carrier (18) of said differential (17).

4. The assembly according to Claim 2 or 3, wherein a reduction stage (9a) between said first electric machine (5a) and said axle shaft (3) weighs on a toothed wheel (15a) rigidly carried by said axle shaft (3).

5. The assembly according to Claim 4, wherein an operating shaft (5a') of said first electric machine is divided into two portions which can be selectively connected to each other by means of said selector means (30).

6. The assembly according to Claim 2 or 3, wherein a reduction stage (9a) between said first electric machine (5a) and said axle shaft (3) weighs on a toothed wheel (15a) rigidly carried by a hub (50) selectively connectable to said axle shaft (3).

7. The assembly according to one of the preceding claims, wherein said differential (17) comprises a carrier (18) carried rotationally free with respect to said casing (7), and a plurality of planet wheels (19) rigidly rotated by said carrier (18) around said axis (A) and meshing with respective toothed wheels (22', 22"), one of said toothed wheels (22', 22") being rigidly connected to one of said axle shafts (2, 3) and the other of said toothed wheels (22', 22") being selectively connectable to the other of said axle shafts (2, 3).

8. The assembly according to one of the preceding claims, wherein said selector means (30) comprise a sleeve (31) movable under the action of actuator means (37) along a respective shaft rotationally coupled to it, said sleeve (31) defining at least one toothing (33, 34, 35, 36) configured to selectively cooperate with an element of said transmission (6).

9. The assembly according to Claim 5, wherein a sleeve (31) of the selector means (30) is operatively interposed between said portions of said operating shaft (5a'), said sleeve (31) being rotationally coupled to one of said portions and comprising a toothing (35') configured to selectively cooperate with a toothing (33') carried by the other of said portions, according to the position of said sleeve (31) on said axis (A).

10. The assembly according to Claim 7, wherein a sleeve (31) of the selector means (30) is operatively interposed between one of said axle shafts (2, 3) and said differential (17), said sleeve (31) being rotationally coupled to a support hub (16) to which one of said toothed wheels (22', 22") is rigidly connected, said sleeve (31) defining a pair of toothings (33, 34) configured to cooperate, according to the position of said sleeve (31) on said axis (A), with respective toothings (35, 36) integral with said casing (7) and one of said axle shafts (2, 3), respectively.

11. The assembly according to Claim 6, wherein a sleeve (31) of the selector means (30) is operatively interposed between said hub (30) and said axle shaft (3), said sleeve (31) being rotationally coupled to said axle shaft (3) and comprising a toothing (35") configured to selectively cooperate with a toothing (33") carried by said hub (50), according to the position of said sleeve (31) on said axis (A).

12. The assembly according to one of Claims 8 to 11, wherein said actuator means (37) comprise at least one of a pneumatic, hydraulic or mechanical actuator.

13. The assembly according to Claim 12, wherein said actuator means (37) comprise elastic means (43) configured to keep said selector means (30) in a predefined configuration.

14. A vehicle comprising a traction system according to one of the preceding claims.

## Patentansprüche

1. Eine Antriebseinheit (1) für ein Fahrzeug, wobei die Antriebseinheit (1) eine linke und eine rechte Achswelle (2, 3) umfasst, die sich entlang einer Längsachse (A) erstrecken und jeweils ein äußeres Ende definieren, das zum Verbinden an eine Radnabe (2a, 3a) des Fahrzeugs eingerichtet ist,
wobei die Antriebseinheit (1) mindestens eine erste und eine zweite elektrische Maschine (5a, 5b) umfasst,
wobei die Antriebseinheit (1) ein Gehäuse (7), das einen Innenraum (8) definiert, umfasst und ein darin aufgenommenes Getriebe (6), das ein Differential (13) und Auswahlmittel (30) umfasst,
wobei die zweite elektrische Maschine (5b) funktionsmäßig mit einer der Achswellen (2, 3) verbunden ist und die erste elektrische Maschine (5a) über erste Auswahlmittel der Auswahlmittel (30) funktionsmäßig mit einer der Achswellen (2, 3) verbindbar ist,
**dadurch gekennzeichnet, dass** das Differential (17) über zweite Auswahlmittel der Auswahlmittel (30) funktionsmäßig zwischen den Achswellen (2, 3) verbindbar ist,
wobei die Auswahlmittel (30) so gesteuert werden, dass das Getriebe (6) mindestens zwei Betriebszustände ermöglicht:
- in einem der Betriebszustände liefert nur die zweite elektrische Maschine (5b) Drehmoment an die Achswellen (2, 3), wobei das Differential (17) funktionsmäßig mit den Achswellen (2, 3) verbunden ist;
- in einem anderen Betriebszustand liefern die erste und die zweite elektrische Maschine (5a, 5b) jeweils Drehmoment an eine der Achswellen (2, 3), wobei das Differential (17) funktionsmäßig zwischen den Achswellen (2, 3) getrennt ist.

2. Die Antriebseinheit nach Anspruch 1, wobei jede der ersten und zweiten elektrischen Maschinen (5a, 5b) über eine Untersetzungsstufe (9a, 9b) funktionsmäßig mit einer jeweiligen Achswelle (3, 2) verbindbar ist, welche mindestens eine Drehmoment- /Drehzahländerung über ein Zahnrad zwischen Zahnrädern umfasst.

3. Die Antriebseinheit nach Anspruch 2, wobei eine Untersetzungsstufe (9b) zwischen der zweiten elektrischen Maschine (5b) und der Achswelle (2) auf ein Zahnrad (15b) wirkt, das starr von einem Träger (18) des Differentials (17) getragen wird.

4. Die Antriebseinheit nach Anspruch 2 oder 3, wobei eine Untersetzungsstufe (9a) zwischen der ersten elektrischen Maschine (5a) und der Achswelle (3) auf ein Zahnrad (15a) wirkt, das starr von der Achswelle (3) getragen wird.

5. Die Antriebseinheit nach Anspruch 4, wobei eine Antriebswelle (5a') der ersten elektrischen Maschine in zwei Abschnitte unterteilt ist, die selektiv über die Auswahlmittel (30) miteinander verbindbar sind.

6. Die Antriebseinheit nach Anspruch 2 oder 3, wobei eine Untersetzungsstufe (9a) zwischen der ersten elektrischen Maschine (5a) und der Achswelle (3) auf ein Zahnrad (15a) wirkt, das starr von einer Nabe (50) getragen wird, die selektiv mit der Achswelle (3) verbindbar ist.

7. Die Antriebseinheit nach einem der vorhergehenden Ansprüche, wobei das Differential (17) einen Träger (18) umfasst, der drehbar frei gegenüber dem Gehäuse (7) getragen ist, und eine Vielzahl von Planetenrädern (19), die durch den Träger (18) um die Achse (A) gedreht werden und mit jeweiligen Zahnrädern (22', 22") in Eingriff stehen, wobei eines der Zahnräder (22', 22") starr mit einer der Achswellen (2, 3) verbunden ist und das andere Zahnrad selektiv mit der anderen Achswelle (2, 3) verbindbar ist.

8. Die Antriebseinheit nach einem der vorhergehenden Ansprüche, wobei die Auswahlmittel (30) eine Hülse (31) umfassen, die unter der Wirkung von Betätigungsmitteln (37) entlang einer jeweiligen, mit ihr drehfest gekoppelten Welle bewegbar ist, wobei die Hülse (31) mindestens eine Verzahnung (33, 34, 35, 36) definiert, die zur selektiven Zusammenarbeit mit einem Element des Getriebes (6) eingerichtet ist.

9. Die Antriebseinheit nach Anspruch 5, wobei eine Hülse (31) der Auswahlmittel (30) funktionsmäßig zwischen den Abschnitten der Antriebswelle (5a') angeordnet ist, wobei die Hülse (31) drehbar mit einem der Abschnitte gekoppelt ist und eine Verzahnung (35') umfasst, die eingerichtet ist, je nach Position der Hülse (31) auf der Achse (A) selektiv mit einer von dem anderen Abschnitt getragenen Verzahnung (33') zusammenzuwirken.

10. Die Antriebseinheit nach Anspruch 7, wobei eine Hülse (31) der Auswahlmittel (30) funktionsmäßig zwischen einer der Achswellen (2, 3) und dem Differential (17) angeordnet ist, wobei die Hülse (31) drehbar mit einer Trägernabe (16) gekoppelt ist, an der eines der Zahnräder (22', 22") starr befestigt ist, wobei die Hülse (31) ein Paar von Verzahnungen (33, 34) definiert, das eingerichtet ist, je nach Position der Hülse (31) auf der Achse (A) mit entsprechenden Verzahnungen (35, 36) zusammenzuwirken, die fest mit dem Gehäuse (7) bzw. einer der Achswellen (2, 3) verbunden sind.

11. Die Antriebseinheit nach Anspruch 6, wobei eine Hülse (31) der Auswahlmittel (30) funktionsmäßig zwischen der Nabe (50) und der Achswelle (3) angeordnet ist, wobei die Hülse (31) drehbar mit der Achswelle (3) verbunden ist und eine Verzahnung (35") umfasst, die eingerichtet ist, je nach Position der Hülse (31) auf der Achse (A) selektiv mit einer von der Nabe (50) getragenen Verzahnung (33") zusammenzuwirken.

12. Die Antriebseinheit nach einem der Ansprüche 8 bis 11, wobei die Betätigungsmittel (37) mindestens eines der folgenden umfassen: einen pneumatischen, hydraulischen oder mechanischen Aktuator.

13. Die Antriebseinheit nach Anspruch 12, wobei die Betätigungsmittel (37) elastische Mittel (43) umfassen, die eingerichtet sind, die Auswahlmittel (30) in einer vordefinierten Konfiguration zu halten.

14. Ein Fahrzeug, das ein Antriebssystem gemäß einem der vorhergehenden Ansprüche umfasst.

## Revendications

1. Ensemble de traction (1) pour un véhicule, ledit ensemble de traction (1) comprenant un arbre d'essieu gauche et droit (2, 3) s'étendant le long d'un axe longitudinal (A) et définissant une extrémité externe configurée pour être raccordée à un moyeu de roue (2a, 3a) dudit véhicule,
ledit ensemble de traction (1) comprenant au moins une première et une seconde machine électrique (5a, 5b),
ledit ensemble de traction (1) comprenant une carcasse (7) définissant un logement (8) et une transmission (6) logée dans ledit logement (8) et comprenant un différentiel (13) et des moyens sélecteurs (30),
dans lequel la seconde machine électrique (5b) est raccordée, de manière opérationnelle, à l'un desdits arbres d'essieu (2, 3) et ladite première machine électrique (5a) peut être raccordée, de manière opérationnelle, à l'un desdits arbres d'essieu (2, 3) au moyen du premier moyen sélecteur desdits moyens sélecteurs (30),
**caractérisé en ce que** ledit différentiel (17) peut être raccordé, de manière opérationnelle, entre lesdits arbres d'essieu (2, 3) au moyen d'un second moyen sélecteur desdits moyens sélecteurs (30),
lesdits moyens sélecteurs (30) étant contrôlés de sorte que ladite transmission (6) permet au moins deux conditions de fonctionnement :
dans l'une desdites conditions de fonctionnement, seule la seconde machine électrique (5b) fournit le couple auxdits arbres d'essieu (2, 3), ledit différentiel (17) étant raccordé, de manière opérationnelle, auxdits arbres d'essieu (2, 3) ;
dans une autre desdites conditions de fonctionnement, les première et seconde machines électriques (5a, 5b) fournissent le couple à un arbre d'essieu (2, 3) respectif, ledit différentiel (17) étant déconnecté, de manière opérationnelle, entre lesdits arbres d'essieu (2, 3).

2. Ensemble selon la revendication 1, dans lequel chacune parmi les première et seconde machines électriques (5a, 5b) peut être raccordée, de manière opérationnelle, à un arbre d'essieu (3, 2) respectif au moyen d'un étage de réduction (9a, 9b) comprenant au moins un changement de couple/de vitesse via un engrenage entre des roues dentées.

3. Ensemble selon la revendication 2, dans lequel un étage de réduction (9b) entre ladite seconde machine électrique (5b) et ledit arbre d'essieu (2) pèse sur une roue dentée (15b) rigidement portée par un support (18) dudit différentiel (17).

4. Ensemble selon la revendication 2 ou 3, dans lequel un étage de réduction (9a) entre ladite première machine électrique (5a) et ledit arbre d'essieu (3) pèse sur une roue dentée (15a) rigidement portée par ledit arbre d'essieu (3).

5. Ensemble selon la revendication 4, dans lequel un arbre opérationnel (5a') de ladite première machine électrique est divisé en deux parties qui peuvent être sélectivement raccordées entre elles au moyen desdits moyens sélecteurs (30).

6. Ensemble selon la revendication 2 ou 3, dans lequel un étage de réduction (9a) entre ladite première machine électrique (5a) et ledit arbre d'essieu (3) pèse sur une roue dentée (15a) rigidement portée par un moyeu (50) pouvant être sélectivement raccordé audit arbre d'essieu (3).

7. Ensemble selon l'une des revendications précédentes, dans lequel ledit différentiel (17) comprend un support (18) porté en rotation libre par rapport à ladite carcasse (7) et une pluralité de satellites (19) entraînés rigidement en rotation par ledit support (18) autour dudit axe (A) et s'engrenant avec des roues dentées (22', 22") respectives, l'une desdites roues dentées (22', 22") étant rigidement raccordée à l'un desdits arbres d'essieu (2, 3) et l'autre desdites roues dentées (22', 22") pouvant être sélectivement raccordée à l'autre desdits arbres d'essieu (2, 3).

8. Ensemble selon l'une des revendications précédentes, dans lequel lesdits moyens sélecteurs (30) comprennent un manchon (31) mobile sous l'action des moyens actionneurs (37) le long d'un arbre respectif couplé, en rotation à ce dernier, ledit manchon (31) définissant au moins une denture (33, 34, 35, 36) configurée pour coopérer, de manière sélective, avec un élément de ladite transmission (6).

9. Ensemble selon la revendication 5, dans lequel un manchon (31) des moyens sélecteurs (30) est intercalé, de manière opérationnelle, entre lesdites parties dudit arbre opérationnel (5a'), ledit manchon (31) étant couplé, en rotation, à l'une desdites parties et comprenant une denture (35') configurée pour coopérer, sélectivement, avec une denture (33') portée par l'autre desdites parties, selon la position dudit manchon (31) sur ledit axe (A).

10. Ensemble selon la revendication 7, dans lequel un manchon (31) des moyens sélecteurs (30) est intercalé, de manière opérationnelle, entre l'un desdits arbres d'essieu (2, 3) et ledit différentiel (17), ledit manchon (31) étant couplé, de manière rotative, à un moyeu de support (16) auquel l'une desdites roues dentées (22', 22") est rigidement raccordée, ledit manchon (31) définissant une paire de dentures (33, 34) configurées pour coopérer respectivement, selon la position dudit manchon (31) sur ledit axe (A), avec des dentures (35, 36) respectives solidaires de ladite carcasse (7) et l'un desdits arbres d'essieu (2, 3).

11. Ensemble selon la revendication 6, dans lequel un manchon (31) des moyens sélecteurs (30) est intercalé, de manière opérationnelle, entre ledit moyeu (30) et ledit arbre d'essieu (3), ledit manchon (31) étant couplé, en rotation, audit arbre d'essieu (3) et comprenant une denture (35") configurée pour coopérer, sélectivement, avec une denture (33") portée par ledit moyeu (50), selon la position dudit manchon (31) sur ledit axe (A).

12. Ensemble selon l'une des revendications 8 à 11, dans lequel lesdits moyens actionneurs (37) comprennent au moins l'un parmi un actionneur pneumatique, hydraulique ou mécanique.

13. Ensemble selon la revendication 12, dans lequel lesdits moyens actionneurs (37) comprennent des moyens élastiques (43) configurés pour maintenir lesdits moyens sélecteurs (30) dans une configuration prédéfinie.

14. Véhicule comprenant un système de traction selon l'une des revendications précédentes.
